(19) Europäisches Patentamt
European Patent Office
Office européen des brevets

(11) **EP 1 197 415 B1**

(12) **EUROPÄISCHE PATENTSCHRIFT**

(45) Veröffentlichungstag und Bekanntmachung des Hinweises auf die Patenterteilung:
**04.07.2007 Patentblatt 2007/27**

(51) Int Cl.:
***B61K 9/00*** *(2006.01)*    ***G01H 1/00*** *(2006.01)*
***G01M 13/04*** *(2006.01)*

(21) Anmeldenummer: **01890281.7**

(22) Anmeldetag: **01.10.2001**

(54) **Verfahren und Vorrichtung zur Erkennung eines schadhaften Wälzlagers eines Schienenfahrzeuges**

Method and device for detecting a defective roller bearing of a railway vehicle

Procédé et dispositif de détection d'un palier à roulement défectueux d'un véhicule ferroviaire

(84) Benannte Vertragsstaaten:
**AT BE CH CY DE DK ES FI FR GB GR IE IT LI LU MC NL PT SE TR**

(30) Priorität: **12.10.2000 AT 17512000**

(43) Veröffentlichungstag der Anmeldung:
**17.04.2002 Patentblatt 2002/16**

(73) Patentinhaber: **Siemens Transportation Systems GmbH & Co KG**
**1110 Wien (AT)**

(72) Erfinder:
• **Kitzmüller, Christian**
**8010 Graz (AT)**
• **Alexandru, Theodor**
**8020 Graz (AT)**

(74) Vertreter: **Peham, Alois**
**Siemens AG,**
**Postfach 22 16 34**
**80506 München (DE)**

(56) Entgegenhaltungen:
EP-A- 0 982 579        WO-A-00/51869
DE-A- 19 702 234       US-A- 4 493 042

EP 1 197 415 B1

**Beschreibung**

Die Erfindung betrifft ein Verfahren zur Erkennung zumindest eines schadhaften Wälzlagers von in Achslagerungen drehbar gelagerten Rädern eines Schienenfahrzeuges, wobei im Bereich zumindest einer Achslagerung zumindest ein Beschleunigungssignal erzeugt wird und anhand dieses Signals beurteilt wird ob ein Wälzlagerschaden vorliegt.

Weiters betrifft die Erfindung eine Vorrichtung zur Erkennung zumindest eines schadhaften Wälzlagers von in Achslagerungen drehbar gelagerten Rädern eines Schienenfahrzeuges, wobei im Bereich zumindest einer Achslagerung zumindest ein Beschleunigungssensor vorgesehen ist, der mit einer Auswerteeinheit in Verbindung steht, die dazu eingerichtet ist, zumindest ein Beschleunigungssignal von dem Beschleunigungssensor zu empfangen und anhand dieses Signals zu beurteilen, ob ein Wälzlagerschaden vorliegt.

Bei Schienenfahrzeugen ist üblicherweise die Radachse eines Rades in einem Wälzlager drehbar gelagert. Bei Beschädigungen des Wälzlagers eines Rades kann ein einwandfreies Abrollen dieses Rades nicht mehr gewährleistet werden. Im praktischen Betrieb eines Schienenfahrzeuges stellt ein beschädigtes Wälzlager daher ein großes Sicherheitsrisiko dar. Darüber hinaus kann eine durch einen Wälzlagerschaden hervorgerufene Radblockade, den Verschleiß des Schienenfahrzeuges wesentlich erhöhen, wodurch sich der präventive Wartungsaufwand und somit auch die damit verbundenen Kosten wesentlich vergrößern.

Eine häufig zum Einsatz kommende Methode besteht darin, dass die Wälzlager eines Schienenfahrzeuges in periodischen Abständen visuell kontrolliert und im Bedarfsfall ausgebaut sowie einer weiteren Überprüfung unterzogen werden. Diese Vorgangsweise ist sehr kostenintensiv, da sie mit einem hohen Zeitaufwand verbunden ist, überdies ist eine permanente Überwachung der Wälzlager auch während des Betriebes des Schienenfahrzeuges nicht möglich.

Es sind auch Vorrichtungen bekannt, die auf der Erzeugung von elektronischen Signalen, beispielsweise von Beschleunigungssignalen, an vorgebbaren Bauteilen basieren, wobei aus den gewonnenen Signalen auf den Zustand des betrachteten Bauteils, beispielsweise eines Wälzlagers, zurückgeschlossen werden soll.

Eine Vorrichtung der eingangs genannten Art wird in der EP 0 058 705 beschrieben. Die dort offenbarte Vorrichtung weist im Bereich jeder Achslagerung der Räder einen Sensor auf, beispielsweise einen Beschleunigungssensor, der Achslagerschwingungen aufnimmt und als Signale an eine Auswerteeinheit weiterleitet. Aus diesen Signalen kann in der Auswerteeinheit auf den Zustand des Wälzlagers geschlossen werden.

Die US 5 433 111 A beschreibt eine Vorrichtung und ein Verfahren zur Erkennung von Radschäden eines Schienenfahrzeuges. Die bekannte Vorrichtung weist eine Messeinheit zur Ermittlung der Achsrotation eines Radsatzes und einen Bewegungssensor, beispielsweise einen Beschleunigungssensor, zur Erfassung von Bewegungen vertikal zur Schienenebene. Bei schadhaften Gleisen wird pro Beschleunigungssensor ein Signal erzeugt. Tritt ein Radschaden auf, so wird dadurch mit der Periode der Achsrotation ein Beschleunigungssignal in vertikaler Richtung erzeugt, welches einen Rückschluss darauf zulässt, ob ein Radschaden vorliegt.

Die DE 198 26 422 A1 bezieht sich auf ein kombiniertes Sensorsystem zur kontinuierlichen Kontrolle der Radsätze, bei welchem Radlagerschäden mittels Körperschallsensoren ermittelt werden. Hierzu werden Lagergeräusche eines Radlagers mit den Lagergeräuschen eines neuen Radlagers verglichen werden.

Die US 5 150 618 A beschreibt eine Vorrichtung zur Detektion eines Lagerschadens, wobei eine an einer Gleisanlage eine Detektionszone mit einem Detektor vorgesehen ist. Bei Vorbeifahren eines Schienenfahrzeuges können mittels akustischer Sensoren Lagergeräusche in elektrische Signale umgewandelt werden, welche in einer Auswerteeinheit auf das Vorhandensein bestimmter Frequenzen untersucht werden.

Die US 5 924 654 offenbart eine Vorrichtung zur Erfassung der Bewegungen eines Schienenfahrzeuges, wobei auf der Innenseite eines Schienenfahrzeugsrahmens ein Sensor angeordnet ist, der zur Erfassung der Bewegungen des Schienenfahrzeuges eingerichtet ist. In einer mit dem Sensor verbundenen Auswerteeinheit können anhand von dem Sensor übermittelten Signalen Schäden an dem Schienenfahrzeug erkannt werden.

Ein weiteres Verfahren der eingangs genannten Art ist beispielsweise aus der WO 0051869 bekannt geworden.

Aus der EP 0 982 579 ist eine Vorrichtung zur Überwachung eines Lagers eines Motors eines Schienenfahrzeuges bekannt. Hierbei wird mittels eines Beschleunigungssensors das Schwingungsverhalten des Lagers überwacht. Die bekannte Vorrichtung eignet sich bauartbedingt nicht zur Überwachung eines Wälzlagers der eingangs genannten Art, da die Messergebnisse bedingt durch die Radgeometrie verfälscht werden.

Nachteilig an den bekannten Methoden ist, dass sie im Fall der Sichtkontrolle mit einem sehr hohen Zeit- bzw. Kostenaufwand verbunden sind, und im Fall der bekannten elektronischen Überwachung keine befriedigenden Ergebnisse hinsichtlich der Genauigkeit bei der Schadenserkennung liefern.

Es ist daher eine Aufgabe der Erfindung einen Weg zu schaffen, der es ermöglicht Wälzlagerschäden mit großer Genauigkeit auf eine einfache und kostengünstige Weise festzustellen.

Diese Aufgabe wird mit einem Verfahren der eingangs genannten Art erfindungsgemäß dadurch gelöst dass, aus dem zumindest einem Beschleunigungssignal eine vorgebbare Anzahl von Außenringüberrollharmonischen ermittelt wird, wobei Radunrundheitsharmonische genau errechnet und von den Außenringüberrollharmonischen unterschieden werden, und zumindest aus den Außenringüberrollharmonischen zumindest ein Kennwert zur Charakterisierung des Wälzlagerzustandes berechnet wird, wobei der Kennwert mit zumindest einem Sollwert verglichen wird.

Diese Lösung gestattet es, den Zustand eines Wälzlagers auch während des Betriebes permanent zu überprüfen und Beschädigungen schon in einem sehr frühen Stadium zu erkennen und ein schadhaftes Wälzlager genau zu lokalisieren.

Um Wälzlagerschäden eindeutig bestimmen zu können, wird zumindest ein Beschleunigungssignal erzeugt, welches den Verlauf der Beschleunigung des Drehgestells in Fahrtrichtung wiedergibt. Eine andere Möglichkeit der eindeutigen Erkennung eines Wälzlagerschadens besteht darin, dass zumindest ein Beschleunigungssignal erzeugt wird, welches den Verlauf der Beschleunigung des Drehgestells normal zur Schienenebene wiedergibt.

Vorteilhafterweise wird bei Überschreiten einer vorgebbaren Abweichung des Kennwertes von dem Sollwert eine Alarmmeldung generiert. Der Vorteil dieser Ausführungsform besteht darin, im Fall eines während einer Fahrt ermittelten Wälzlagerschadens durch Erzeugung einer Alarmmeldung das Ergreifen von Maßnahmen zu ermöglichen, um einen Unfall zu verhindern, beispielsweise durch Verringerung der Fahrtgeschwindigkeit des Schienenfahrzeuges.

Zur Ermittlung des Kennwertes zur Charakterisierung des Wälzlagerzustandes werden Signalwerte des zumindest einen Beschleunigungssignals, die innerhalb eines vorgebbaren Zeitfensters liegen, einer Fourier- oder einer verwandten Transformation unterworfen. In weiterer Folge werden aus jeder Fouriertransformierten oder mit ihr verwandten Transformierten der Signalwerte die Außenringüberrollharmonischen ermittelt.

Eine vorteilhafte Variante der Erfindung, um die Genauigkeit der Ermittlung der Außenringharmonischen zu erhöhen, sieht vor, dass zur Beurteilung vorgebbarer Spektrallinien Vertrauensfaktoren gebildet werden und sodann der arithmetische Mittelwert einer vorgebbaren Anzahl von Vertrauensfaktoren berechnet wird. Weiters wird ein mit den Vertrauensfaktoren gewichteter Amplitudenmittelwert der Außenringüberrollharmonischen gebildet, wobei in weiterer Folge zumindest aus dem gewichteten Amplitudenmittelwert der Außenringüberrollharmonischen und dem arithmetischen Mittelwert der Vertrauensfaktoren ein Merkmalsraum zur Beurteilung von Wälzlagerschäden gebildet wird.

In einer anderen Variante wird die Summe der Amplituden einer vorgebbaren Anzahl von Außenringüberrollharmonischen berechnet und anschließend das Verhältnis dieser Summe zu der Summe der Amplituden der gleichen Anzahl anderer vorgebbarer Außenringüberrollharmonischer gebildet. Um den Zustand eines Wälzlagers in Abhängigkeit von seiner Betriebszeit analysieren zu können, kann bei dieser Variante der ermittelte oder gemittelte Kennwert in vorgebbaren Zeitabständen einer Kennwertdatenbank abgelegt wird.

Zur Realisierung des erfindungsgemäßen Verfahrens eignet sich im besonderen eine Vorrichtung zur Erkennung zumindest eines schadhaften Wälzlagers von in Achslagerungen drehbar gelagerten Rädern eines Schienenfahrzeuges, wobei unmittelbar in dem Bereich einer Achslagerung jedes Rades eines Schienenfahrzeuges zumindest ein Beschleunigungssensor angeordnet ist, der mit einer Auswerteeinheit in Verbindung steht, die dazu eingerichtet ist, aus dem zumindest einem Beschleunigungssignal eine vorgebbare Anzahl von Außenringüberrollharmonischen zu ermitteln und hierbei Radunrundheitsharmonische genau zu errechnen und von den Außenringüberrollharmonischen zu unterscheiden sowie zumindest aus den Außenringüberrollharmonischen zumindest einen Kennwert zur Charakterisierung des Wälzlagerzustandes zu berechnen, wobei die Auswerteeinheit weiters dazu eingerichtet ist, bei Überschreiten einer vorgebbaren Abweichung des Kennwertes von dem Sollwert eine Alarmmeldung zu generieren.

Vorteilhafterweise ist die Auswerteeinheit dazu eingerichtet, bei einer vorgebbaren Abweichung des Kennwertes von dem Sollwert eine Alarmmeldung zu generieren, und auf einer eigens dafür vorgesehenen Ausgabeeinheit darzustellen, wobei die Ausgabeeinheit dazu eingerichtet ist, die Alarmmeldung in optischer und/oder akustischer Weise auszugeben.

Um Wälzlagerschäden eindeutig bestimmen zu können, verläuft in einer vorteilhaften Ausführungsform der Erfindung die Wirkungsrichtung des zumindest einen Beschleunigungssensors in Fahrtrichtung des Schienenfahrzeuges und/oder normal zur Schienenebene.

In einer günstigen Ausführungsform der Erfindung ist die Auswerteeinheit dazu eingerichtet, Signalwerte des zumindest einen Beschleunigungssignals, die innerhalb eines vorgebbaren Zeitfensters liegen, einer Fourier- oder einer verwandten Transformation zu unterwerfen, wobei die Auswerteeinheit weiters dazu eingerichtet ist, aus jeder Fouriertransformierten oder mit ihr verwandten Transformierten der Signalwerte des Beschleunigungssignals eine vorgebbare Anzahl von Außenringüberrollharmonischen zu ermitteln.

Eine vorteilhafte Variante der Erfindung sieht vor, dass die Auswerteeinheit dazu eingerichtet ist, Vertrauensfaktoren zur Beurteilung vorgebbarer Spektrallinien zu berechnen, und einen mit den Vertrauensfaktoren gewichteten Amplitudenmittelwert der Außenringüberrollharmonischen zu bilden.

Weiters ist die Auswerteeinheit dazu eingerichtet, zumindest aus dem gewichteten Amplitudenmittelwert der Außenringüberrollharmonischen und dem arithmetischen Mittelwert der Vertrauensfaktoren einen Merkmalsraum zur Beurteilung von Wälzlagerschäden zu bilden.

Eine andere vorteilhafte Variante der Erfindung besteht darin, dass die Auswerteeinheit dazu eingerichtet ist, die Summe der Amplituden einer vorgebbaren Anzahl von Außenringüberrollharmonischen zu berechnen, und anschließend das Verhältnis dieser Summe zu der Summe der Amplituden der gleichen Anzahl anderer vorgebbarer Außenringüberrollharmonischer zu bilden.

Günstigerweise ist eine Kennwertdatenbank zur Speicherung des zumindest einen ermittelten oder gemittelten Kennwertes vorgesehen.

Die Erfindung samt weiteren Vorteilen wird im folgenden anhand einiger nicht einschränkender Ausführungsbeispiele näher erläutert, die in der Zeichnung veranschaulicht sind. In dieser zeigen schematisch

    Fig. 1 eine Draufsicht auf ein Drehgestell mit einer erfindungsgemäßen Vorrichtung zur Ermittlung von Wälzlagerschäden,

    Fig. 2 ein Wälzlager eines Rades,

    Fig. 3 einen Ausschnitt eines Amplitudenspektrums eines Beschleunigungssignals,

    Fig. 4 die erfindungsgemäße Vorrichtung aus Fig. 1 im näheren Detail und

    Fig. 5 einen Merkmalsraum zur Erkennung von Wälzlagerschäden.

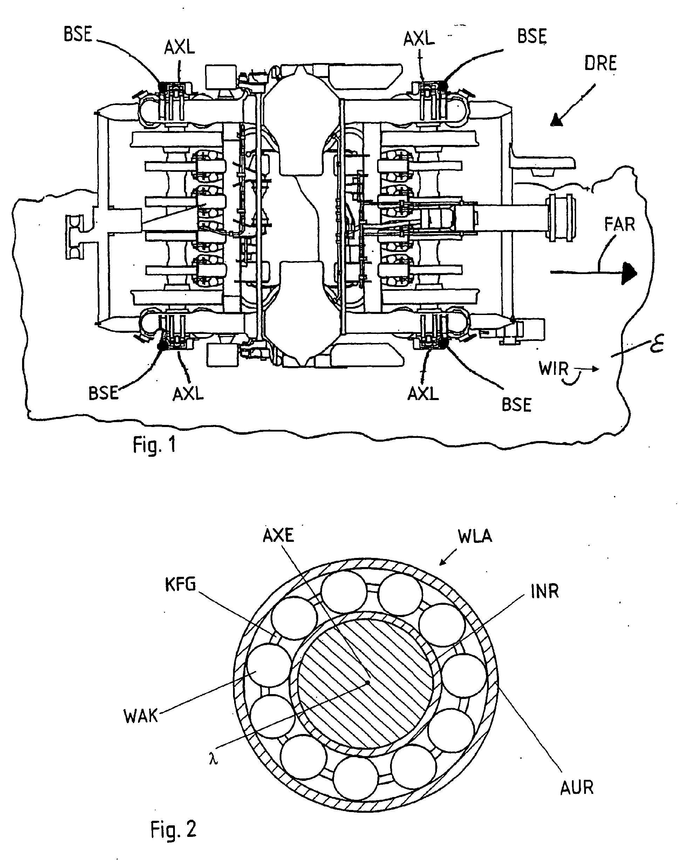

Gemäß Fig. 1 weist ein Drehgestell DRE eines Schienenfahrzeuges an jeder Achslagerung AXL eines Rades einen Beschleunigungssensor BSE für eine erfindungsgemäße Vorrichtung zur Erkennung eines Wälzlagerschadens auf.

Durch die Drehbewegung einer starr mit dem Innenring eines Wälzlagers verbundenen Radachse wird während einer Fahrt des Schienenfahrzeuges eine kontinuierliche Drehbewegung des Innenringes gegenüber dem Außenring des Wälzlagers aufrecht erhalten. Aufgrund dieser Relativbewegung des Innenringes gegenüber dem Außenring werden Schwingungen in dem Wälzlager hervorgerufen. Diese Schwingungen sind in Form lokaler Beschleunigungsschwankungen an der Achslagerung AXL messbar, wobei bestimmte Anteile dieser Schwingungen ein Maß für den Zustand des Wälzlagers darstellen.

Die Achslagerung AXL besteht üblicherweise aus dem soeben erwähnten Wälzlager, Gehäuseteilen und einem Deckel. Die Beschleunigungssensoren BSE können beispielsweise an dem Deckel bzw. an dem Gehäuse der Achslagerung AXL angeordnet sein.

Ein wesentliches Element der vorliegenden Erfindung ist die Erkenntnis, dass besonders repräsentative Messergebnisse erzielt werden können, wenn die Wirkungsrichtung der Beschleunigungssensoren BSE im wesentlichen normal zur Schienenebene ε oder parallel zur Fahrtrichtung des Schienenfahrzeuges verläuft. In der Zeichnung ist die Fahrtrichtung FAR bzw. die Wirkungsrichtung der Beschleunigungssensoren BSE mit einem Pfeil dargestellt.

Unter Wirkungsrichtung eines Beschleunigungssensors BSE wird in diesem Dokument die Richtung verstanden, in welcher der Sensor Beschleunigungskräfte aufnehmen und Signale liefern kann.

Die Beschleunigungssensoren BSE können beispielsweise als piezoelektrische Sensoren ausgebildet sein, bei welchen in bekannter Weise ein piezoelektrischer Kristall zwischen zwei parallel zueinander verlaufenden Kondensatorplatten angeordnet ist. Findet diese Art von Sensoren Verwendung so kann man dadurch, dass die beiden Kondensatorplatten im wesentlichen normal zur Fahrtrichtung des Schienenfahrzeuges oder parallel zur Schienenebene ε verlaufen, die Wirkrichtung der Beschleunigungssensoren BSE mit der Fahrtrichtung bzw. mit einer Richtung normal zu dieser zur Übereinstimmung bringen. Selbstverständlich können auch andere bekannte Beschleunigungssensoren, die auf anderen Mechanismen beruhen, verwendet werden.

In der weiteren Betrachtung in diesem Dokument wird auf eine Anordnung der Beschleunigungssensoren Bezug genommen, bei welcher die Wirkrichtung der Sensoren normal zur Schienenebene ε verläuft.

Das Wälzlager WLA gemäß Fig. 2 weist einen Außenring AUR und einen Innenring INR auf, zwischen denen Wälzkörper WAK angeordnet sind, die in einem Käfig KFG drehbar gelagert sind. Der Innenring INR ist starr mit der Radachse AXE verbunden und rotiert mit ihrer Rollfrequenz um die Längssymmetriegerade λ des Wälzlagers WLA. Aufgrund der Rollreibung zwischen dem Innenring INR und den Wälzkörpern WAK folgt der Käfig KFG der Rotationsbewegung des Innenringes INR. Aus den geometrischen Gegebenheiten des Wälzlagers WLA lässt sich bekannterweise die theoretische Überrollfrequenz der Wälzkörper WAK über den Außenring AUR bzw. Innenring INR in Abhängigkeit von der Rotationsgeschwindigkeit der Radachse AXE berechnen - siehe dazu auch "Wälzlagerdiagnostik für Maschinen und Anlagen" von Prof. Dr. sc. techn. Adolf Sturm et. al. 1. Auflage VEB Verlag Technik, Berlin, 1985, Kap. 2, S. 26 - 43.

Der Innenring- bzw. der Außenringüberrollschwingung bzw. deren Frequenzen, die wesentlich von der Rotationsfrequenz des Käfigs KFG abhängen, kommt, wie im folgenden beschrieben, für die Erkennung eines Wälzlagerschadens eine große Bedeutung zu. Insbesondere kann man durch eine Analyse der Innenringbzw. Außenringüberrollharmonischen eine sehr genaue Aussage über den Zustand des Wälzlagers treffen.

In der weiteren Betrachtung werden nur die Außenringüberrollschwingung und ihre Harmonischen betrachtet, obgleich auch eine kombinierte Analyse der Innenringüberrollschwingung und der Außenringüberrollschwingung zur Wälzlagerdiagnose herangezogen werden kann.

Unter dem Begriff Harmonische werden in diesem Dokument Spektrallinien verstanden, deren Frequenzen zueinander ein ganzzahliges Verhältnis aufweisen. Dies tritt insbesondere bei der Fouriertransformation von periodischen, nicht sinusförmigen Signalen auf. Die Grundharmonische ist dabei die Harmonische mit der niedrigsten Frequenz, welche dem Kehrwert der Periodendauer eines solchen Signals entspricht.

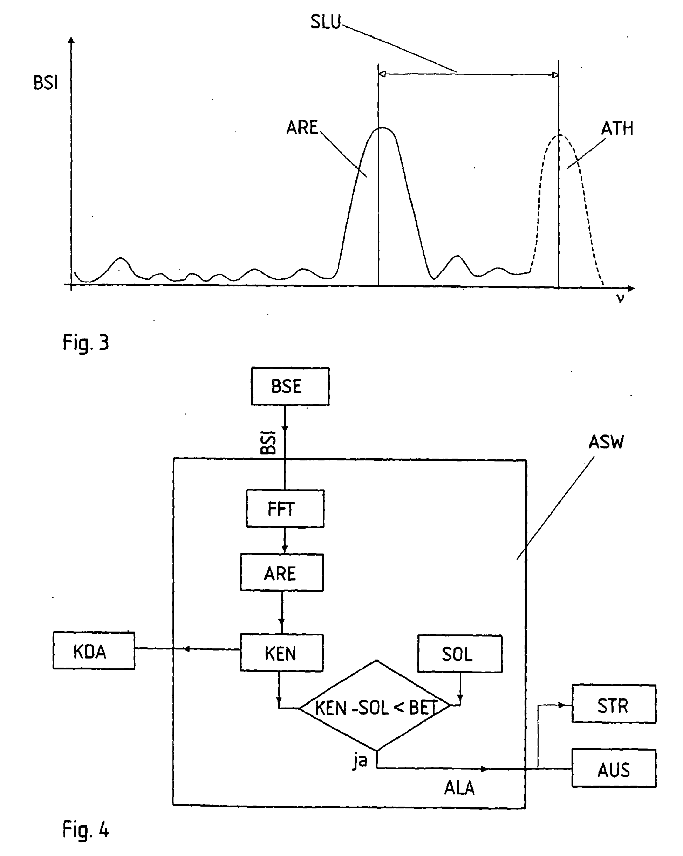

Die Überrollfrequenzen des Außenringes AUR und des Innenringes INR geben an, wie oft eine Stelle der jeweiligen Laufbahn pro Zeiteinheit von einem Wälzkörper KUG überrollt wird, jedoch weichen gemäß Fig. 3 die realen ARE und die zugehörige theoretischen ATH Außenringüberrollfrequenzen infolge eines Schlupfes SLU, der eine Folge der auftretenden Gleitreibung zwischen dem Innenring INR, den Wälzkörpern KUG und dem Außenring AUR ist, voneinander ab, gleiches gilt für die reale und die theoretische Innenringüberrollfrequenz.

Grundsätzlich wird in der vorliegenden Betrachtung zwischen kinematischen Frequenzen - wie der Außenringüberrollharmonischen und Strukturfrequenzen - den Eigenschwingungen eines Bauteils - unterschieden.

Während die kinematischen Frequenzen von der Rotationsgeschwindigkeit der Radachse abhängen, sind die Strukturfrequenzen geschwindigkeitsunabhängig und ein Charakteristikum des jeweiligen Bauteils - beispielsweise des Wälzlagers.

Ist eine Stelle der Laufbahn des Außenringes AUR schadhaft, so ergibt sich daraus eine Stoßfolge mit der Überrollfrequenz der Wälzkörper WAK über den Außenring AUS. Aufgrund der periodischen Stoßfolge beim Überrollen der Schädigungsstelle erhält man in der Theorie im Frequenzbereich das typische Spektrum einer Impulsfolge, welche die Form von Dirac-Impulsen aufweist.

Die Amplituden der räumlichen Außenringüberrollharmonischen lassen einen exakten Rückschluss auf die Form bzw. Größe der Schädigungsstelle zu. In der Realität ist die räumliche Stoßfolge jedoch einer direkten Messung nicht zugänglich, sondern kann nur, wie bereits oben erwähnt, in Form der Beschleunigungen, die durch die angeregten Schwingungen des Achslagergehäuses verursacht werden, detektiert werden. Dennoch steht die Amplitudenhöhe der gemessenen Beschleunigungssignale in direktem Zusammenhang mit der Schädigungsstärke.

Aus diesem Grund kann, wie weiter unten ausführlicher beschrieben, beispielsweise ein Kennwert zur Schadenserkennung als gewichteter Mittelwert der Amplituden einer günstigen Auswahl von Harmonischen gebildet werden, wobei die Gewichtung aufgrund der Ausgeprägtheit der jeweiligen Spektrallinie erfolgen kann.

Gemäß Fig. 4 werden die von den Beschleunigungssensoren BSE aufgenommenen Beschleunigungssignale BSI an eine Auswerteeinheit ASW übermittelt. Die Übertragung der Beschleunigungssignale BSI von den Beschleunigungssensoren BSE zu der Auswerteeinheit ASW kann über Drahtleitungen, Glasfaserkabel oder drahtlos erfolgen. Dadurch, dass jeder Achslagerung AXL zumindest ein Beschleunigungssignal BSI zugeordnet ist, kann ein schadhaftes Wälzlager WAL sofort lokalisiert werden.

In der Auswerteeinheit werden Signalwerte des Beschleunigungssignals BSI, die innerhalb eines vorgebbaren Zeitfensters liegen, einer Fouriertransformation FFT unterworfen.

Schaltungen und Verfahren zur Durchführung einer Fouriertransformation, insbesondere einer Fast Fouriertransformation sind bekannt und beispielsweise in der EP 402 145 und in "Sprachverarbeitung" von B. Eppinger und E. Herter; Hanser Verlag München Wien 1993 S. 68-71 beschrieben.

In dem erhaltenen Spektrum werden sodann die realen Außenringüberrollharmonischen ARE ermittelt.

Bei einer ersten Methode werden dazu anhand der theoretischen Käfigfrequenzen Frequenzintervalle ermittelt, in welchen die realen Außenringüberrollharmonischen ARE liegen - zum Begriff der Käfigfrequenz siehe auch "Wälzlagerdiagnostik für Maschinen und Anlagen" von Prof. Dr. sc. techn. Adolf Sturm et. al. 1. Auflage VEB Verlag Technik, Berlin, 1985, Kap. 2, S. 26 - 43. Diese Intervalle werden nach Maximalwerten der Amplituden durchsucht, da die realen Außenringüberrollharmonischen ARE bei einem schadhaften Wälzlager WAL die Bereichsdominanten, d. h. die höchsten Spektrallinien, dieser Intervalle werden können.

Es besteht dabei die Gefahr, die Grundfrequenz der realen Außenringüberrollharmonischen ARE mit einer höherzahligen Radunrundheitsharmonischen zu verwechseln. Um das zu vermeiden, werden die Radunrundheitsharmonischen genau errechnet und von den Überrollharmonischen unterschieden.

Bei den Radunrundheitsharmonischen handelt es sich ebenfalls um erzwungene periodische Schwingungen, d. h. um ein diskretes Spektrum, dessen Spektrallinien den realen Außenringüberrollharmonischen ARE gleichen. Hervorgerufen werden die Radunrundheitsharmonischen durch Abweichungen des Radquerschnittes von der Kreisform. Die Grundharmonische der Radunrundheitsharmonischen liegt exakt bei der Rotationsfrequenz der Radachse.

Aufgrund des nicht ganzzahligen Verhältnisses zwischen Rotationsfrequenz der Radachse und realer Außenringüberrollgrundharmonischer ARE variiert die Position der benachbarten Radunrundheitsharmonischen in Bezug auf die jeweilige Außenringüberrollharmonische. Am Achslagergehäuse können nennenswerte Amplituden auftreten, deren Verwechslung mit einer Überrollharmonischen zu einer Fehldiagnose führen können.

Dennoch stellt die Ausscheidung der Radharmonischen kein Problem dar, weil ihre Position bei Kenntnis der Drehfrequenz der Radachse exakt bekannt ist. So muss einfach die Absolutfrequenz der Kandidaten für die Außenringüberrollharmonischen durch die Wellenfrequenz dividiert und dann entschieden werden, ob das Verhältnis zu Nahe einer Ganzzahl liegt. In diesem Fall wird die entsprechende Harmonische nicht weiter betrachtet.

Ausgehend von den übriggebliebenen Harmonischen kann auf die erzeugende Käfigfrequenz zurückgerechnet werden und daraus ein mittels weiter unten beschriebener Vertrauensfaktoren gewichteter Mittelwert gebildet werden. Dieser gilt als Schätzwert für die wahre Käfigfrequenz. Da alle Harmonischen natürlich von einer identischen Käfigfrequenz abstammen müssen, werden jene mit zu großer Abweichung vom Schätzwert eliminiert. Aus den übriggebliebenen Harmonischen wird ein neuer Schätzwert rückgerechnet und verglichen. Dieser Vorgang wird solange wiederholt bis keine Harmonischen mehr ausgeschieden werden. Sind nach diesem iterativen Ausscheidvorgang noch mindestens zwei Harmonische übrig, können diese als reale Außenringüberrollharmonische ARE betrachtet und der weiteren Analyse zugeführt werden.

Im Rahmen des regulären Fahrbetriebes kommt es streckenbedingt regelmäßig zu stoßförmigen Anregungen des gesamten Fahrwerks, insbesondere durch Weichenüberfahrten und Brückenauszügen. Diese Stöße führen zu einer breitbandigen Anregung mit verhältnismäßig hoher Amplitude, welche innerhalb der Analyseintervalle fälschlich dem Achslager zugeordnet werden könnten. Da es sich dabei aber nicht wie beim Überrollvorgang im Achslager um eine periodische Impulsfolge handelt, sondern um einen transienten Einmalvorgang, entsteht eher ein kontinuierliches Amplitudenspektrum und keine diskreten Spektrallinien. Diese Eigenschaft ermöglicht eine Unterscheidung, indem man quantifiziert, wie diskret eine Spektrallinie ist.

Eine Möglichkeit diese Unterscheidung zu realisieren besteht darin, die Höhe der betrachteten Spektrallinie auf die mittlere Amplitude im Analyseintervall des Amplitudenspektrums zu beziehen. Dieser Wert soll in weiterer Folge mit Crestwert bezeichnet werden - in Anlehnung an den üblichen Crestfaktor, welcher jedoch das Verhältnis von Scheitelwert zu quadratischen Mittelwert wiedergibt.

Im Fall einer ausgeprägten, diskreten Spektrallinie ist das arithmetische Mittel im Vergleich zur Höhe der Spektrallinie verhältnismäßig klein, was zu einem großen Crestwert führt. Im Gegensatz dazu führt eine breitbandige Anregung zu einem erhöhten arithmetischen Mittel und dadurch zu einem geringeren Crestwert.

Der mögliche Wertebereich des Crestwerts erstreckt sich von Eins bis unendlich, abhängig davon, ob es sich um ein ebenes Spektrum oder um einen unendlich hohen Peak einer Spektrallinie handelt. Um den Crestwert zur Gewichtung heranziehen zu können, muss eine Funktion gebildet werden, die für einen Crestwert von Eins Null wird und für einen sehr hohen Crestwert in einen Sättigungsbereich übergeht. Letzteres ist vor allem deshalb von Bedeutung, damit eine Störung mit sehr hoher Amplitude nicht durch eine dominante Gewichtung die übrigen Harmonischen bei der Kennwertbildung ausschaltet.

Der Vertrauensfaktor kann beispielsweise durch Bildung des dekadischen Logarithmus des Crestwerts erhalten werden.

Der Kennwert zur Erkennung eines Wälzlagerschadens wird durch einen mit dem Vertrauensfaktor der jeweiligen Spektrallinie gewichteten, normierten Mittelwert der analysierten Amplituden gebildet. Harmonische mit einem höheren Vertrauensfaktor bestimmen stärker den endgültigen Amplitudenwert. Die Bildung des gewichteten Mittelwertes erfolgt dabei nach der Formel

$$\overline{a_{ges}} = \frac{\sum_i v_i * a_i}{\sum_i v_i},$$

in welcher $\overline{\alpha_{ges}}$ den gewichteten Mittelwert der Amplituden, $v_i$ den Vertrauensfaktor der jeweiligen Spektrallinie und $a_i$ die Amplituden der betrachteten Außenringüberrollharmonischen bedeuten.

Die Vertrauensfaktoren $v_i$ dienen hauptsächlich zur Gewichtung bei Kenngrößen, die aus Einzelkennwerten mehrerer Harmonischer abgeleitet werden. In dieser Eigenschaft sind sie jedoch nicht mehr direkt zugänglich, d. h. es ist nicht erkennbar, ob zum Beispiel ein gewichteter Amplitudenwert $\alpha_{ges}$ aus lauter Harmonischen mit sehr hohen Vertrauensfaktoren $v_i$ gebildet wurde, oder aus ausschließlich wenig vertrauenswürdigen Spektrallinien. So würden mehrere Harmonische mit identischem Vertrauensfaktor $v_i$ unabhängig von deren Höhe immer denselben gewichteten Amplitudenmittelwert $\overline{\alpha_{ges}}$ liefern. Um diese Eigenschaft ebenfalls der Klassifizierung zugänglich zu machen, kann als weiteres Merkmal das arithmetische Mittel aller beteiligten Vertrauensfaktoren $v_i$ nach der Formel

$$\overline{v}_{ges} = \frac{\sum_i v_i}{n}$$

gebildet werden, in der $\overline{v}_{ges}$ dem arithmetischen Mittel der Vertrauensfaktoren $v_i$ und n der Anzahl der Vertrauensfaktoren $v_i$ entspricht.

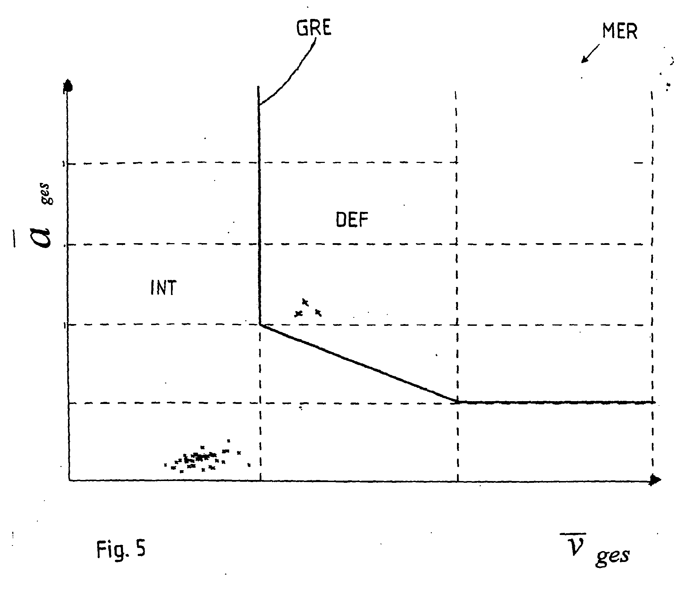

Aus diesen Merkmalen kann, wie in Fig. 5 dargestellt, beispielsweise ein zweidimensionaler Merkmalsraum MER mit dem gewichteten Mittel der Amplituden $\overline{\alpha_{ges}}$ und dem arithmetischen Mittel der Vertrauensfaktoren $\overline{v}_{ges}$ als Merkmale definiert werden. Als Entscheidungsgrenzen für die Klassifizierung in die beiden Klassen "intakt" INT und "defekt" DEF können beispielsweise drei lineare Grenzen gewählt werden. In der Fig. 5 ist die Gesamtheit dieser Grenzen mit GRE bezeichnet.

Die Grenzen werden durch einen vorgebbaren Schwellwert für den gewichteten Amplitudenmittelwert $\overline{\alpha_{ges}}$, einen Schwellwert für den mittleren Vertrauensfaktor $\overline{v}_{ges}$ und einer schrägen Schwelle für Harmonische mit einem gewichteten Amplitudenmittelwert $\overline{\alpha_{ges}}$ und einem mittlern Vertrauensfaktor $\overline{v}_{ges}$ nahe den obigen Schwellwerten gebildet.

Die Entscheidungsgrenzen sind nicht vollständig eingezeichnet, sondern nur soweit, als sie jenen Bereich beranden, der alle drei Kriterien erfüllt. Entsprechend ihrer Klassifizierung in dem Merkmalsraum entsprechen die einzelnen Harmonischen Wälzlagerschäden. Die über den Schwellwerten bzw. Sollwerten SOL liegenden Kennwerte KEN entsprechen defekten Wälzlagern.

Prinzipiell ist jede Form der Entscheidungsgrenze denkbar, die Klassifikation anhand obiger Grenzen ist jedoch besonders einfach implementierbar, da nur das jeweilige Merkmal bzw. der jeweilige Kennwert KEN mit dem zugehörigen Schwellwert bzw. Sollwert SOL verglichen bzw. eine einfache Geradengleichung für die dritte Grenze gelöst werden muss.

Überschreitet der Kennwert KEN eines Wälzlagers WAL den Sollwert SOL um einen vorgebbaren Betrag BET, so wird eine Alarmmeldung ALA auf einer Ausgabeeinheit AUS, beispielsweise ein Display auf dem Armaturenbrett eines Triebwagens, generiert. Zur Erhöhung der Betriebssicherheit des Schienenfahrzeuges kann bei Überschreiten des Sollwertes auch von einer eigens hierfür vorgesehenen Steuerung STR eine Bremsung eingeleitet werden.

Bei einer zweiten Methode werden, um ein gutes Signal/Rauschverhältnis und eine hohe Empfindlichkeit zu erhalten, die Außenringüberrollharmonischen erst dann gemessen, wenn die Rotationsfrequenz der Radachse so hoch ist, dass ausgewählte Außenringüberrollharmonische in Resonanzbereichen der Strukturschwingungen liegen. Diese Vorgangsweise entspricht im wesentlichen einer Filterung der Beschleunigungssignale BSI.

Zur Bildung eines Kennwertes zur Erkennung eines Radsatzlagerschadens ist es bei dieser Methode notwendig, die Grundfrequenz der Überrollschwingungen des Außenringes zu ermitteln, mit deren Hilfe man in weiterer Folge ihre Harmonischen ausfindig machen kann.

Wie bei der oben beschriebenen ersten Methode besteht auch hier die Gefahr, die Grundfrequenz der Außenringüberrollschwingung mit einer höheren Radunrundheitsharmonischen, beispielsweise der achten, zu verwechseln. Um das zu vermeiden werden die Radunrundheitsharmonischen, wie bereits oben beschrieben, exakt berechnet und von den benachbarten Überrollharmonischen unterschieden. Das ist jedoch nicht in allen Frequenzbereichen möglich, da durch einen zeitlich variablen Schlupf sowohl im beschädigten als auch im unbeschädigten Zustand die theoretischen Abstände zwischen den Rad- und den benachbarten Außenringüberrollharmonischen ARE nicht eingehalten werden.

Aus diesem Grund werden zwei Frequenzdomänen betrachtet, welche die nullte - die Grundharmonische - und die erste bzw. die siebte und die achte Außenringüberrollharmonische bei einer vorgebbaren Drehfrequenz der Radachse, beispielsweise 28 Hz, beinhalten.

Zur Ermittlung der genauen Position der betrachteten Außenringüberrollharmonischen werden die ersten Radharmonischen berechnet, beispielsweise die erste bis zur neunzehnten. Danach wird in einem Bereich zwischen der achten Radharmonischen und dem theoretischen Wert der Grundfrequenz der Außenringüberrollharmonischen nach einer ausgeprägten Spitze gesucht, welche als reale Grundfrequenz der Außenringüberrollharmonischen eingestuft wird. Ausgehend von dieser Grundfrequenz erfolgt die Ermittlung der ersten bzw. der siebten und achten Außenringüberrollharmonischen ARE.

In weiterer Folge wird zur Kennwertberechnung die Summe der Amplituden zweier benachbarter Außenringüberrollharmonischer ARE - der siebten und der achten - gebildet und das Verhältnis dieser Summe und der Summe zweier anderer benachbarter Außenringüberrollharmonischer ARE - der Grundfrequenz und der ersten - nach folgender Formel berechnet

$$ k = \frac{A_{v_{AR7}} + A_{v_{AR8}}}{A_{v_{AR0}} + A_{v_{AR1}}}, $$

in der k dem Kennwert KEN, $A_{v_{AR7}}$ der Amplitude der siebten, $A_{v_{AR8}}$ der Amplitude der achten, $A_{v_{AR1}}$ der Amplitude der ersten und $A_{v_{AR0}}$ der Amplitude der Grund-Harmonischen der Außenringüberrollschwingung entsprechen.

Treten Beschädigungen der Rollbahn des Wälzlagers auf, so kann dieser Kennwert KEN im Fall eines leichtbeschädigten Wälzlagers WAL bis auf den dimensionslosen Wert 3 und im Fall eines schwerbeschädigten Wälzlagers WAL bis auf den Wert 4 ansteigen.

Die Quantifizierbarkeit des Wälzlagerschadens lässt bei der Festsetzung des Sollwertes SOL einen gewissen Spielraum zu. So kann beispielsweise der Sollwert SOL so festgelegt werden, dass er einem Wert entspricht, der einem intakten, einem leicht oder schwer beschädigten Wälzlager WAL zugeordnet ist.

Natürlich ist es bei den oben beschriebenen Verfahren auch möglich, dass Wertebereichen bzw. Werten des soeben erwähnten Kennwertes ein bestimmter Schadenszustand des Wälzlagers entspricht. Ein bestimmter Wert/Wertebereich des Kennwertes KEN entspricht beispielsweise einem geringen Schaden, ein anderer Wert/Wertebereich einem stärker beschädigten Wälzlager und wieder ein anderer Wert/Wertebereich einem schwer beschädigten Wälzlager. Ein direkter Vergleich mit einem Sollwert SOL ist in diesem Fall nicht notwendig.

Überschreitet der Kennwert KEN den Sollwert SOL um einen vorgebbaren Betrag BET, so kann, wie bereits oben beschrieben, eine Alarmmeldung ALA auf einer Ausgabeeinheit AUS, beispielsweise ein Display auf dem Armaturenbrett eines Triebwagens, generiert oder eine Bremsung eingeleitet werden.

Das oben beschriebene Verfahren kann selbstverständlich unter Verwendung bekannter, entsprechend programmierter Mikroprozessoren online durchgeführt werden. Dem Fachmann sind darüber hinaus zahlreiche Programme bzw. Programmiersprachen bekannt, die sich zur Realisierung des erfindungsgemäßen Verfahrens eignen, beispielsweise Mathematica, Matlab etc.

**Patentansprüche**

1. Verfahren zur Erkennung zumindest eines schadhaften Wälzlagers (WLA) von in Achslagerungen (AXL) drehbar gelagerten Rädern eines Schienenfahrzeuges, wobei im Bereich zumindest einer Achslagerung (AXL) zumindest ein Beschleunigungssignal (BSI) erzeugt wird und anhand dieses Signals beurteilt wird ob ein Wälzlagerschaden vorliegt, **dadurch gekennzeichnet, dass** aus dem zumindest einem Beschleunigungssignal (BSI) eine vorgebbare Anzahl von Außenringüberrollharmonischen (ARH) ermittelt wird, wobei Radunrundheitsharmonische genau errechnet und von den Außenringüberrollharmonischen unterschieden werden, und zumindest aus den Außenringüberrollharmonischen (ARH) zumindest ein Kennwert (KEN) zur Charakterisierung des Wälzlagerzustandes berechnet wird, wobei der Kennwert (KEN) mit zumindest einem Sollwert (SOL) verglichen wird.

2. Verfahren nach Anspruch 1, **dadurch gekennzeichnet, dass** zumindest ein Beschleunigungssignal (BSI) erzeugt wird, welches den Verlauf der Beschleunigung des Drehgestells normal zur Schienebene (e) wiedergibt.

3. Verfahren nach Anspruch 1 oder 2, **dadurch gekennzeichnet, dass** zumindest ein Beschleunigungssignal (BSI) erzeugt wird, welches den Verlauf der Beschleunigung des Drehgestells in Fahrtrichtung wiedergibt.

4. Verfahren nach Anspruch 3, **dadurch gekennzeichnet, dass** bei Überschreiten einer vorgebbaren Abweichung des Kennwertes (KEN) von dem Sollwert (SOL) eine Alarmmeldung (ALA) generiert wird.

5. Verfahren nach einem der Ansprüche 1 bis 4, **dadurch gekennzeichnet, dass** Signalwerte des zumindest einen Beschleunigungssignals (BSI), die innerhalb eines vorgebbaren Zeitfensters liegen, einer Fouriertransformation oder einer anderen unitären Transformation unterworfen werden, die den Zeitbereich eines Signals auf den Frequenzbereich abbildet und aus jeder Transformierten die Außenringüberrollharmonischen ermittelt werden.

6. Verfahren nach Anspruch 5, **dadurch gekennzeichnet, dass** zur Beurteilung vorgebbarer Spektrallinien Vertrauensfaktoren ($v_i$) berechnet werden, um die Genauigkeit der Ermittlung der Außenringüberrollharmonischen zu erhöhen.

7. Verfahren nach Anspruch 6, **dadurch gekennzeichnet, dass** zur weiteren Beurteilung der Außenringüberrollharmonischen der arithmetische Mittelwert ($\overline{v}_{ges}$) einer vorgebbaren Anzahl von Vertrauensfaktoren ($v_i$) berechnet wird.

8. Verfahren nach Anspruch 6 oder 7, **dadurch gekennzeichnet, dass** ein mit den Vertrauensfaktoren ($v_i$) gewichteter Amplitudenmittelwert ($\overline{\alpha_{ges}}$) der Außenringüberrollharmonischen (ARH) gebildet wird.

9. Verfahren nach Anspruch 8, **dadurch gekennzeichnet, dass** zumindest aus dem gewichteten Amplitudenmittelwert ($\overline{\alpha_{ges}}$) der Außenringüberrollharmonischen (ARH) und dem arithmetischen Mittelwert ($\overline{v}_{ges}$) der Vertrauensfaktoren ($v_i$) ein Merkmalsraum (MER) zur Beurteilung von Wälzlagerschäden gebildet wird.

10. Verfahren nach einem der Ansprüche 1 bis 9, **dadurch gekennzeichnet, dass** die Summe der Amplituden ($A_{v_{AR7}}, A_{v_{AR8}}, A_{v_{AR1}}, A_{v_{AR0}}$) einer vorgebbaren Anzahl von Außenringüberrollharmonischen (ARH) berechnet wird und anschließend zwecks Normierung das Verhältnis dieser Summe zu der Summe der Amplituden ($A_{v_{AR7}}, A_{v_{AR8}}, A_{v_{AR1}}, A_{v_{AR0}}$) der gleichen Anzahl anderer vorgebbarer Außenringüberrollharmonischer (ARH) gebildet wird.

11. Verfahren nach einem der Ansprüche 1 bis 10, **dadurch gekennzeichnet, dass** der ermittelte oder gemittelte Kennwert (KEN) in vorgebbaren Zeitabständen einer Kennwertdatenbank (KDA) abgelegt wird.

12. Vorrichtung zur Erkennung zumindest eines schadhaften Wälzlagers (WLA) von in Achslagerungen (AXL) drehbar gelagerten Rädern eines Schienenfahrzeuges, wobei im Bereich zumindest einer Achslagerung (AXL) zumindest ein Beschleunigungssensor (BSE) vorgesehen ist, der mit einer Auswerteeinheit (ASW) in Verbindung steht, die dazu eingerichtet ist, zumindest ein Beschleunigungssignal (BSI) von dem Beschleunigungssensor zu empfangen und anhand dieses Signals zu beurteilen, ob ein Wälzlagerschaden vorliegt, **dadurch gekennzeichnet, dass** unmittelbar in dem Bereich einer Achslagerung (AXL) jedes Rades eines Schienenfahrzeuges zumindest ein Beschleunigungssensor (BSE) angeordnet ist, der mit einer Auswerteeinheit (ASW) in Verbindung steht, die dazu eingerichtet ist, aus dem zumindest einem Beschleunigungssignal (BSI) eine vorgebbare Anzahl von Außenringüberrollharmonischen (ARH) zu ermitteln und hierbei Radunrundheitsharmonische genau zu errechnen und von den Außenringüberrollharmonischen (ARH) zu unterscheiden sowie zumindest aus den Außenringüberrollharmonischen (ARH) zumindest einen Kennwert (KEN) zur Charakterisierung des Wälzlagerzustandes zu berechnen, wobei die Auswerteeinheit (ASW) weiters dazu eingerichtet ist, bei Überschreiten einer vorgebbaren Abweichung des Kennwertes (KEN) von dem Sollwert (SOL) eine Alarmmeldung (ALA) zu generieren.

13. Vorrichtung nach Anspruch 12, **dadurch gekennzeichnet, dass** eine Ausgabeeinheit (AUS) zur Ausgabe der Alarmmeldung (ALA) vorgesehen ist, wobei die Ausgabeeinheit (AUS) dazu eingerichtet ist, die Alarmmeldung (ALA) in optischer und/oder akustischer Weise auszugeben.

14. Vorrichtung nach Ansprüche 12 bis 13, **dadurch gekennzeichnet, dass** die Wirkungsrichtung (WIR) des zumindest einen Beschleunigungssensors (BSE) in Fahrtrichtung (FAR) des Schienenfahrzeuges verläuft.

15. Vorrichtung nach einem der Ansprüche 12 bis 14, **dadurch gekennzeichnet, dass** die Wirkungsrichtung (WIR) des zumindest einen Beschleunigungssensors (BSE) normal zur Schienenebene (ε) verläuft.

16. Vorrichtung nach einem der Ansprüche 12 bis 15, **dadurch gekennzeichnet, dass** die Auswerteeinheit (ASW) dazu eingerichtet ist, Signalwerte des zumindest einen Beschleunigungssignals (BSI), die innerhalb eines vorgebbaren Zeitfensters liegen, einer Fouriertransformation oder einer anderen unitären Transformation zu unterwerfen , die den Zeitbereich eines Signals auf den Frequenzbereich abbildet und aus jeder Transformierten eine vorgebbare Anzahl von Außenringüberrollharmonischen zu ermitteln.

17. Vorrichtung nach Anspruch 16, **dadurch gekennzeichnet, dass** die Auswerteeinheit (ASW) dazu eingerichtet ist, zur Beurteilung vorgebbarer Spektrallinien Vertrauensfaktoren ($v_i$) zu berechnen und **dadurch** die Genauigkeit der Ermittlung der Außenringüberrollharmonischen zu erhöhen.

18. Vorrichtung nach Anspruch 17, **dadurch gekennzeichnet, dass** die Auswerteeinheit (ASW) dazu eingerichtet ist, zur weiteren Beurteilung der Außenringüberrollharmonischen den arithmetischen Mittelwert ($\overline{v}_{ges}$) einer vorgebbaren Anzahl von Vertrauensfaktoren ($v_i$) zu berechnen.

19. Vorrichtung nach Anspruch 18, **dadurch gekennzeichnet, dass** die Auswerteeinheit (ASW) dazu eingerichtet ist, einen mit den Vertrauensfaktoren ($v_i$) gewichteten Amplitudenmittelwert ($\overline{\alpha_{ges}}$) der Außenringüberrollharmonischen (ARH) zu bilden.

20. Vorrichtung nach Anspruch 19, **dadurch gekennzeichnet, dass** die Auswerteeinheit (ASW) dazu eingerichtet ist, zumindest aus dem gewichteten Amplitudenmittelwert ($\overline{\alpha_{ges}}$) der Außenringüberrollharmonischen (ARH) und dem arithmetischen Mittelwert ($\overline{v}_{ges}$) der Vertrauensfaktoren ($v_i$) einen Merkmalsraum (MER) zur Beurteilung von Wälzlagerschäden zu bilden.

21. Vorrichtung nach einem der Ansprüche 12 bis 20, **dadurch gekennzeichnet, dass** die Auswerteeinheit (ASW) dazu eingerichtet ist, die Summe der Amplituden ($A_{v_{AR7}}$, $A_{v_{AR8}}$, $A_{v_{AR1}}$, $A_{v_{AR0}}$) einer vorgebbaren Anzahl von Außenringüberrollharmonischen (ARH) zu berechnen, und anschließend zwecks Normierung das Verhältnis dieser Summe zu der Summe der Amplituden ($A_{v_{AR7}}$ , $A_{v_{AR8}}$ , $A_{v_{AR1}}$ , $A_{v_{AR0}}$ ) der gleichen Anzahl anderer vorgebbarer Außenringüberrollharmonischer (ARH) zu bilden.

22. Vorrichtung nach einem der Ansprüche 12 bis 21, **dadurch gekennzeichnet, dass** eine Kennwertdatenbank (KDA) zur Speicherung des zumindest einen ermittelten oder gemittelten Kennwertes (KEN) vorgesehen ist.

## Claims

1. A method for the recognition of at least one damaged roller bearing (WLA) of wheels of a rail vehicle mounted for rotation in axle bearings (AXL), while in the region of at least one axle bearing (AXL) at least one acceleration signal (BSI) is produced and a decision is made with reference to this signal as to whether roller bearing damage is present, **characterized in that** a predefined number of outer race rollover harmonics (ARH) is determined from the at least one acceleration signal (BSI), in which wheel non-circularity harmonics are precisely calculated and distinguished from the outer race rollover harmonics, and at least from the outer race rollover harmonics (ARH) at least one characteristic value (KEN) is computed for characterization of the state of the roller bearings, said characteristic value (KEN) being compared with at least one nominal value (SOL).

2. The method as defined in claim 1, **characterized in that** at least one acceleration signal (BSI) is produced which reproduces the curve of acceleration of the bogie in a direction normal to the plane ($\varepsilon$)of the rails.

3. The method as defined in claim 1 or claim 2, **characterized in that** at least one acceleration signal (BSI) is produced which reproduces the course of acceleration of the bogie in the direction of travel.

4. The method as defined in claim 3, **characterized in that** when a predefined deviation of said characteristic value (KEN) from the nominal value (SOL) is exceeded, an alarm report (ALA) is generated.

5. The method as defined in any one of claims 1 to 4, **characterized in that** signal values of the at least one acceleration signal (BSI) lying within a predefined time window, are subjected to a Fourier transformation or to some other unitary transformation, which images the time domain of a signal on said frequency domain and the outer race rollover harmonics are determined from each transformed signal.

6. The method as defined in claim 5, **characterized in that** for assessment of predefined spectral lines, confidence factors ($v_i$) are calculated in order to increase the accuracy of the assessment of said outer race rollover harmonics.

7. The method as defined in claim 6, **characterized in that** for further assessment of the outer race rollover harmonics, the arithmetic mean ($\overline{v}_{ges}$) of a predefined number of confidence factors is calculated.

8. The method as defined in claim 6 or claim 7, **characterized in that** a mean amplitude ($\overline{\alpha_{ges}}$) of said outer race rollover harmonics (ARH) weighted with said confidence factors ($v_i$) is formed.

9. The method as defined in claim 8, **characterized in that** at least from the weighted mean amplitude ($\overline{\alpha_{ges}}$) of the outer race rollover harmonics (ARH) and the arithmetic mean ($\overline{v_{ges}}$) of the confidence factors ($v_i$), a feature space (MER) is formed for the assessment of roller bearing damage.

10. The method as defined in any one of claims 1 to 9, **characterized in that** the sum of the amplitudes ($A_{v_{AR7}}$, $A_{v_{AR8}}$, $A_{v_{AR1}}$, $A_{v_{AR0}}$) of a predefined number of outer race rollover harmonics (ARH) is calculated and then, for the purpose of standardization, the ratio of this sum to the sum of the amplitudes ($A_{v_{AR7}}$, $A_{v_{AR8}}$, $A_{v_{AR1}}$, $A_{v_{AR0}}$) of the identical number of other predefined outer race rollover harmonics (ARH) is formed.

11. The method as defined in any one of claims 1 to 10, **characterized in that** the determined or averaged characteristic value (KEN) is stored in a characteristic data bank (KDA) at predefined time intervals.

12. A device for the recognition of at least one damaged roller bearing (WLA) of wheels of a rail vehicle which are mounted for rotation in axle bearings (AXL), in which in the region of at least one axle bearing (AXL) at least one acceleration pick-up (BSE) is provided that communicates with an evaluation unit (ASW) which is designed to receive at least one acceleration signal (BSI) from the acceleration pick-up and to judge with reference to this signal whether roller bearing damage is present, **characterized in that** in the immediate proximity of an axle bearing (AXL) of each wheel of a rail vehicle at least one acceleration pick-up (BSE) is disposed that communicates with an evaluation unit (ASW), which is adapted to ascertain, from the at least one acceleration signal (BSI), a predefined number of outer race rollover harmonics (ARH) and to precisely calculate the wheel non-circularity harmonics and to distinguish the same from said outer race rollover harmonics (ARH) and also to calculate, from at least said outer race rollover harmonics (ARH), at least one characteristic value (KEN) for characterization of the state of the roller bearings, the evaluation unit (ASW) further being adapted to generate an alarm report (ALA) when a predefined deviation of the characteristic value (KEN) from the nominal value (SOL) is exceeded.

13. The device as defined in claim 12, **characterized in that** an output unit (AUS) is provided to output said alarm report (ALA), the output unit (AUS) being adapted to output the alarm report (ALA) visibly and/or acoustically.

14. The device as defined in any one of claims 12 to 13, **characterized in that** the direction of action (WIR) of the at least one acceleration pick-up (BSE) runs in the direction of travel (FAR) of the rail vehicle.

15. The device as defined in any one of claims 12 to 14, **characterized in that** the direction of action (WIR) of the at least one acceleration pick-up (BSE) runs normal to the plane of the rails (e).

16. The device as defined in any one of claims 12 to 15, **characterized in that** said evaluation unit (ASW) is adapted to subject signal values of the at least one acceleration signal (BSI) that lie within a predefined time window, to a Fourier transformation or to some other unitary transformation that images the time domain of a signal on the frequency domain, and to ascertain, from each transformed signal value, a predefined number of outer race rollover harmonics.

17. The device as defined in claim 16, **characterized in that** said evaluation unit (ASW) is adapted to calculate confidence factors ($\nu_i$) for the assessment of predefined spectral lines and by this means to increase the accuracy of the assessment of the outer race rollover harmonics.

18. The device as defined in claim 17, **characterized in that** said evaluation unit (ASW) is adapted to calculate the arithmetic mean ($\bar{\nu}_{ges}$) of a predefined number of confidence factors ($\nu_i$) for further assessment of the outer race rollover harmonics.

19. The device as defined in claim 18, **characterized in that** said evaluation unit (ASW) is adapted to form a mean amplitude ($\overline{\alpha_{ges}}$) of the outer race rollover harmonics (ARH) weighted with said confidence factors ($\nu_i$).

20. The device as defined in claim 19, **characterized in that** said evaluation unit (ASW) is adapted to form a feature space (MER) for assessment of roller bearing damage from at least the weighted mean amplitude ($\overline{\alpha_{ges}}$) of the outer race rollover harmonics (ARH) and the arithmetic mean ($\bar{\nu}_{ges}$) of said confidence factors ($\nu_i$).

21. The device as defined in any one of claims 12 to 20, **characterized in that** said evaluation unit (ASW) is adapted to calculate the sum of the amplitudes ($A_{\nu_{AR7}}$, $A_{\nu_{AR8}}$, $A_{\nu_{AR1}}$, $A_{\nu_{AR0}}$) of a predefined number of outer race rollover harmonics (ARH) and then to form, for the purpose of standardization, the ratio of this sum to the sum of the amplitudes ($A_{\nu_{AR7}}$, $A_{\nu_{AR8}}$, $A_{\nu_{AR1}}$, $A_{\nu_{AR0}}$) of the same number of other predefined outer race rollover harmonics (ARH).

22. The device as defined in any one of claims 12 to 21, **characterized in that** a characteristic data bank (KDA) is provided for the storage of the at least one determined or averaged characteristic value (KEN).

### Revendications

1. Procédé de détection d'au moins un palier à roulement défectueux (WLA) de roues d'un véhicule ferroviaire logées de façon rotative dans des logements d'essieu (AXL), au moins un signal d'accélération (BSI) étant généré dans la zone d'au moins un logement d'essieu (AXL) et ce signal étant utilisé pour évaluer si un palier à roulement est endommagé, **caractérisé en ce qu'**à partir au moins un signal d'accélération (BSI), un nombre pouvant être prédéterminé d'harmoniques de roulement de bague extérieure (ARH) est déterminé, les harmoniques d'excentricité de roue étant exactement calculés et distingués des harmoniques de roulement de bague extérieure, et au moins à partir des harmoniques de roulement de bague extérieure (ARH) au moins une valeur caractéristique (KEN) est calculée pour caractériser l'état du palier à roulement, la valeur caractéristique (KEN) étant comparée à au moins une valeur de consigne (SOL).

2. Procédé selon la revendication 1, **caractérisé en ce que** au moins un signal d'accélération (BSI) est généré, lequel reproduit le tracé de l'accélération du boggie perpendiculairement au plan du rail ($\varepsilon$).

3. Procédé selon la revendication 1 ou 2, **caractérisé en ce que** au moins un signal d'accélération (BSI) est généré, lequel reproduit le tracé de l'accélération du boggie dans le sens de la marche.

4. Procédé selon la revendication 3, **caractérisé en ce qu'**en cas de dépassement d'un écart pouvant être prédéterminé de la valeur caractéristique (KEN) par rapport à la valeur de consigne (SOL) un message d'alarme (ALA) est généré.

5. Procédé selon l'une quelconque des revendications 1 à 4, **caractérisé en ce que** des valeurs de signal du au moins un signal d'accélération (BSI), lesquelles se situent à l'intérieur d'une fenêtre de temps pouvant être prédéterminée, sont soumises à une transformation de Fourier ou à une autre transformation unitaire, qui représente le domaine temporel d'un signal sur la gamme des fréquences et les harmoniques de roulement de bague extérieure sont déterminés à partir de chaque transformée.

6. Procédé selon la revendication 5, **caractérisé en ce qu'**en vue d'évaluer les lignes spectrales pouvant être prédéterminées on calcule des facteurs de confiance ($v_i$) afin d'accroître l'exactitude de la détermination des harmoniques de roulement de bague extérieure.

7. Procédé selon la revendication 6, **caractérisé en ce qu'**en vue d'une évaluation supplémentaire des harmoniques de roulement de bague extérieure on calcule la valeur moyenne arithmétique ($\bar{v}_{ges}$) d'un nombre pouvant être prédéterminé de facteurs de confiance ($v_i$).

8. Procédé selon la revendication 6 ou 7, **caractérisé en ce qu'**une valeur moyenne d'amplitude ($\overline{\alpha_{ges}}$), pondérée avec les facteurs de confiance ($v_i$), des harmoniques de roulement de bague extérieure (ARH) est établie.

**9.** Procédé selon la revendication 8, **caractérisé en ce qu'**au moins à partir de la valeur moyenne d'amplitude pondérée ($\overline{\alpha_{ges}}$) des harmoniques de roulement de bague extérieure (ARH) et à partir de la valeur moyenne arithmétique ($\overline{v}_{ges}$) des facteurs de confiance ($v_i$) est formé un espace (MER) pour évaluer les dommages de palier à roulement.

**10.** Procédé selon l'une quelconque des revendications 1 à 9, **caractérisé en ce qu'**on calcule la somme des amplitudes ($A_{vAR1}$, $A_{vAR8}$, $A_{vAR1}$, $A_{vAR0}$) d'un nombre pouvant être prédéterminé d'harmoniques de roulement de bague extérieure (ARH) et ensuite on établit en vue d'une normalisation le rapport entre cette somme et la somme des amplitudes ($A_{vAR7}$, $A_{vAR8}$, $A_{vAR1}$, $A_{vAR0}$) du même nombre d'autres harmoniques de roulement de bague extérieure (ARH) pouvant être prédéterminés.

**11.** Procédé selon l'une quelconque des revendications 1 à 10, **caractérisé en ce que** la valeur caractéristique (KEN) déterminée ou moyenne est mémorisée à intervalles de temps pouvant être prédéterminés dans une base de données de valeurs caractéristiques (KDA).

**12.** Dispositif de détection d'au moins un palier à roulement défectueux (WLA) de roues d'un véhicule ferroviaire logées de façon rotative dans des logements d'essieu (AXL), au moins un capteur d'accélération (BSE) étant prévu dans la zone d'au moins un logement d'essieu (AXL), ledit capteur étant en liaison avec une unité d'évaluation (ASW) conçue pour recevoir au moins un signal d'accélération (BSI) depuis le capteur d'accélération et pour évaluer à partir de ce signal s'il existe un dommage de palier à roulement, **caractérisé en ce que** directement dans la zone d'un logement d'essieu (AXL) de chaque roue d'un véhicule ferroviaire est disposé au moins un capteur d'accélération (BSE) qui est en liaison avec une unité d'évaluation (ASW) conçue pour déterminer à partir du au moins un signal d'accélération (BSI), un nombre pouvant être prédéterminé d'harmoniques de roulement de bague extérieure (ARH), et pour calculer exactement les harmoniques d'excentricité de roue, pour les distinguer des harmoniques de roulement de bague extérieure (ARH) ainsi que pour calculer au moins à partir des harmoniques de roulement de bague extérieure (ARH) au moins une valeur caractéristique (KEN) destinée à caractériser l'état du palier à roulement, l'unité d'évaluation (ASW) étant en outre conçue pour générer un message d'alarme (ALA) en cas de dépassement d'un écart pouvant être prédéterminé de la valeur caractéristique (KEN) par rapport à la valeur de consigne (SOL).

**13.** Dispositif selon la revendication 12,

**caractérisé en ce qu'**une unité de sortie (AUS) est prévue pour sortir le message d'alarme (ALA), l'unité de sortie (AUS) étant conçue pour sortir le message d'alarme (ALA) de façon visuelle et/ou acoustique.

**14.** Dispositif selon les revendications 12 à 13, **caractérisé en ce que** le sens d'action du au moins un capteur d'accélération (BSE) passe dans le sens de la marche (FAR) du véhicule ferroviaire.

**15.** Dispositif selon l'une quelconque des revendications 12 à 14, **caractérisé en ce que** le sens d'action (WIR) du au moins un capteur d'accélération (BSE) passe perpendiculairement au plan de rail ($\varepsilon$).

**16.** Dispositif selon l'une quelconque des revendications 12 à 15, **caractérisé en ce que** l'unité d'évaluation (ASW) est conçue pour soumettre des valeurs de signal du au moins un signal d'accélération (BSI), lesquelles se situent à l'intérieur d'une fenêtre de temps pouvant être prédéterminée, à une transformation de Fourier ou à une autre transformation unitaire qui représente le domaine temporel d'un signal sur la gamme des fréquences, et pour déterminer à partir de chaque transformée un nombre pouvant être prédéterminé d'harmoniques de roulement de bague extérieure.

**17.** Dispositif selon la revendication 16, **caractérisé en ce que** l'unité d'évaluation (ASW) est conçue pour calculer des facteurs de confiance ($v_i$) en vue d'évaluer des lignes spectrales pouvant être prédéterminées et ainsi d'accroître l'exactitude de la détermination des harmoniques de roulement de bague extérieure.

**18.** Dispositif selon la revendication 17, **caractérisé en ce que** l'unité d'évaluation (ASW) est conçue pour calculer, en vue d'une évaluation supplémentaire des harmoniques de roulement de bague extérieure, la valeur moyenne arithmétique ($\overline{v}_{ges}$) d'un nombre pouvant être prédéterminé de facteurs de confiance ($v_i$).

**19.** Dispositif selon la revendication 18, **caractérisé en ce que** l'unité d'évaluation (ASW) est conçue pour établir une valeur moyenne d'amplitude ($\overline{\alpha_{ges}}$), pondérée avec les facteurs de confiance ($v_i$), des harmoniques de roulement de bague extérieure (ARH).

**20.** Dispositif selon la revendication 19, **caractérisé en ce que** l'unité d'évaluation (ASW) est conçue pour former au moins à partir de la valeur moyenne d'amplitude pondérée ($\overline{\alpha_{ges}}$) des harmoniques de roulement de bague extérieure (ARH) et à partir de la valeur moyenne arithmétique ($v_{ges}$) des facteurs de confiance ($v_i$) un espace (MER) pour évaluer les dommages de palier à roulement.

**21.** Dispositif selon l'une quelconque des revendications 12 à 20, **caractérisé en ce que** l'unité d'évaluation (ASW) est conçue pour calculer la somme des amplitudes ($A_{v_{AR7}}$, $A_{v_{AR8}}$, $A_{v_{AR1}}$, $A_{v_{AR0}}$) d'un nombre pouvant être prédéterminé d'harmoniques de roulement de bague extérieure (ARH), et pour ensuite établir en vue d'une normalisation le rapport entre cette somme et la somme des amplitudes ($A_{v_{AR7}}$, $A_{v_{AR8}}$, $A_{v_{AR1}}$, $A_{v_{AR0}}$) du même nombre d'autres harmoniques de roulement de bague extérieure (ARH) pouvant être prédéterminés.

**22.** Dispositif selon l'une quelconque des revendications 12 à 21, **caractérisé en ce qu'**une base de données de valeurs caractéristiques (KDA) est prévue pour mémoriser la au moins une valeur caractéristique (KEN) déterminée ou moyenne.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0058705 A
- US 5433111 A
- DE 19826422 A1
- US 5150618 A
- US 5924654 A
- WO 0051869 A
- EP 0982579 A
- EP 402145 A

**In der Beschreibung aufgeführte Nicht-Patentliteratur**

- **PROF. DR. SC. TECHN. ADOLF STURM.** Wälzlagerdiagnostik für Maschinen und Anlagen. VEB Verlag Technik, 1985, vol. 2, 26-43
- **B. EPPINGER ; E. HERTER.** Sprachverarbeitung. Hanser Verlag, 1993, 68-71